# EUROPÄISCHE PATENTSCHRIFT

(11) **EP 0 889 059 B1**
(45) Veröffentlichungstag und Bekanntmachung des Hinweises auf die Patenterteilung: **12.02.2003**
(21) Anmeldenummer: 98109263.8
(22) Anmeldetag: 22.05.1998
(51) Int. Cl.: C08F 4/60, C08F 10/00

(54) **Katalysatorsystem auf Basis von Monoazadien-Metallkomplexen**
Catalyst based on monoazadiene metal complexes
Système catalytique comportant un complexe métallique monoazadiène

(30) Priorität: 02.07.1997 DE 19728126
(43) Veröffentlichungstag der Anmeldung: 07.01.1999
(73) Patentinhaber: BAYER AG, 51368 Leverkusen (DE)
(72) Erfinder: Becke, Sigurd, Dr., 51503 Rösrath (DE); Windisch, Heike, Dr., 51429 Bergisch Gladbach (DE); Scholz, Joachim, Dr., 06217 Merseburg (DE); Kahlert, Steffen, 51061 Köln (DE)

(56) Entgegenhaltungen:
- US-A- 5 495 036

## Beschreibung

Die vorliegende Erfindung betrifft ein Katalysatorsystem auf Basis von Monoazadien-Metallkomplexen sowie deren Verwendung für die Polymerisation von ungesättigten Verbindungen, insbesondere für die Polymerisation und Copolymerisation von Olefinen und/oder Dienen.

Die Verwendung von Metallocenen, insbesondere die Verwendung von Metallocen-Komplexen im Gemisch mit aktivierenden Cokatalysatoren, bevorzugt Alumoxanen, zur Polymerisation von Olefinen und Diolefinen ist seit langem bekannt ( z.B. EP-A 129 368, 347 128, 347 129, 69 951, 351 392, 485 821, 485 823).

Die Metallocene haben sich als hoch wirksame, spezifische Katalysatoren bei der Polymerisation von insbesondere Olefinen erwiesen. Zur Steigerung der Aktivität, Selektivität, Steuerung der Mikrostruktur, der Molgewichte und der Molgewichtsverteilung wurden daher in den letzten Jahren eine Vielzahl neuer Metallocen-Katalysatoren bzw. Metallocen-Katalysator-Systeme für die Polymerisation von olefinischen Verbindungen entwickelt.

Spezielle Typen von Metallocen-Komplexen sind Dicyclopentadienyl-dien-Metallkomplexe, wie sie in WO 96/04290 für die Übergangsmetalle der vierten Gruppe beschrieben sind. In Kombination mit aktivierenden Cokatalysatoren eignen sich die Biscyclopentadienyldien-Metallkomplexe gemäß WO 96/04290 zur Polymerisation von Olefinen, Diolefinen und/oder acetylenisch ungesättigten Monomeren.

Nachteilig bei den beschriebenen Dien-Komplexen ist, daß sie nur in geringen Ausbeuten zugänglich und sehr aufwendig in reiner Form darstellbar sind. Die Dien-Komplexe sind extrem luft- und feuchtigkeitsempfindlich und müssen daher in sogenannten "glove boxes" hergestellt werden, um eine Zersetzung der Komplexe zu vermeiden. Insbesondere bei der Aktivierung der Dien-Komplexe mit Cokatalysatoren entstehen hochempfindliche Verbindungen, die in "glove boxes" hergestellt und aufbewahrt werden müssen. Die Verwendung von Dien-Komplexen als Polymerisationskatalysatoren ist aufgrund ihrer extremen Empfindlichkeit gegenüber Verunreinigungen, wie z.B. Spuren an Sauerstoff oder Feuchtigkeit technisch von Nachteil. Zur Vermeidung der Zersetzung bzw. Desaktivierung des Katalysators müssen aufwendige Reinigungsoperationen für z.B. die eingesetzten Monomere, Lösungsmittel und Apparaturen durchgeführt werden. Ein weiterer Nachteil ist die schlechte Löslichkeit der Dien-Komplexe in für die Polyolefinherstellung üblichen technischen Lösungsmitteln, wie Hexan oder anderen aliphatischen Kohlenwasserstoffen.

Weiterhin sind Biscyclopentadienyl-monoazadien-Komplexe elektronenarmer Übergangsmetalle, wie Zirkonocen-monoazadien-Komplexe bekannt, die carbonyl- oder carbonyl-analoge Verbindungen zu addieren vermögen (J. Scholz et al., Chem. R. 1993, 126, S. 803 ff. und J. Whitby et al., J. Chem. Soc., Chem. Commun., 1991, S. 1743 ff.). Die dort beschriebenen Monoazadien-Metallkomplexe allein sind jedoch praktisch nicht aktiv bei der Polymerisation von olefinischen Verbindungen.

Es bestand daher u.a. die Aufgabe, ein Katalysatorsystem zu finden, das die oben beschriebenen Nachteile vermeidet. Insbesondere bestand die Aufgabe darin, ein bei Lagerung stabiles Katalysatorsystem zu finden, das einfach zu synthetisieren und technisch leicht zu handhaben ist und sich ohne Probleme für die Polymerisation insbesondere von olefinischen Verbindungen aktivieren läßt. Das Katalysatorsystem sollte insbesondere in der Lage sein, Diene optimal zu polymerisieren.

Es wurde nun überraschend gefunden, daß Katalysatorsysteme auf Basis von Monoazadien-Metallkomplexen sich besonders gut für die gestellten Aufgaben eignen.

Gegenstand der vorliegenden Erfindung ist also ein Katalysatorsystem bestehend aus
a) einem Monoazadien-Metallkomplex der Formel 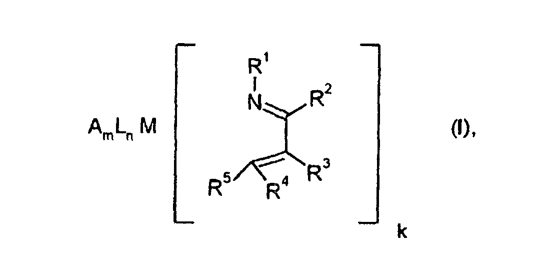 wobei
   - M: ein Metall aus der Gruppe IIIb, IVb, Vb, VIb oder der Lanthaniden oder der Actiniden des Periodensystems der Elemente [N.N. Greenwood, A Earnshaw, Chemie der Elemente, VCH 1990] ist,
   - A: ein gegebenenfalls ein- oder mehrfach verbrückter anionischer Ligand bedeutet,
   - R¹, R², R³, R⁴, R⁵: gleich oder verschieden sind und stehen fiir Wasserstoff, Halogen, eine Cynaogruppe, eine C₁- bis C₂₀-Alkylgruppe, eine C₁bis C₁₀-Fluoralkylgruppe, eine C₆- bis C₁₀-Fluorarylgruppe, eine C₁bis C₁₀-Alkoxygruppe, eine C₆- bis C₂₀-Arylgruppe, eine C₆- bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀- Arylalkenylgruppe, eine C₂ bis C₁₀-Alkinylgruppe, eine gegebenenfalls durch C₁-C₁₀-Kohlenwasserstoffreste substituierte Silylgruppe
   oder
   - R¹, R², R³, R⁴, R⁵: jeweils zusammen mit den sie verbindenden Atomen ein oder mehrere aliphatische oder aromatische Ringsysteme bilden, welche ein oder mehrere Heteroatome (O, N, S) enthalten können und 5 bis 10 Kohlenstoffatome aufweisen,
   - L: ein Neutralligand bedeutet,
   - n: eine Zahl von 0 bis 10 ist,
   - m: 0, 1, 2, 3 oder 4 bedeutet sowie
   - k: 1, 2 oder 3 ist und die Summe von m + k in Abhängigkeit von der Oxidationsstufe von M 1 bis 5 beträgt
   und
b) einem zur Aktivierung des Metallkomplexes a) geeigneten Cokatalysator, wobei das molare Verhältnis von Komponente a) zu Komponente b) im Bereich von 1:0,1 bis 1:10 000, bevorzugt 1:1 bis 1:1 000, liegt.

Als Monoazadien-Metallkomplexe der Formel (I) kommen insbesondere solche in Frage, in denen
- M: ein Metall aus der Gruppe IVb, Vb oder der Lanthaniden des Periodensystems der Elemente ist,
- A: eine Allylgruppe der Formel C₃R⁶₅, wobei R⁶ die gleiche Bedeutung hat wie R¹ bis R⁵ in der Formel (I),
ein Halogenid (F, Cl, Br, J),
ein Sulfonat der Formel O₃SR⁶,
ein Amid der Formel NR⁶₂,
ein Pyrazolat der Formel N₂C₃R⁷₃ mit R⁷ für Wasserstoff oder eine C₁-C₁₀-Alkylgruppe,
ein Pyrazolylborat der Formel R⁶B(N₂C₃R⁷₃)₃
ein Älkoholat oder Phenolat der Formel OR⁶,
ein Siloxan der Formel OSiR⁶₃,
ein Thiolat der Formel SR⁶,
ein Acetylacetonat der Formel (R¹CO)₂CR⁶,
ein Diimin der Formel (R¹N=CR⁶)₂,
ein Cyclopentadienyl der Formel C₅H_{q}R⁶_{5-q} mit q für 0, 1, 2, 3, 4, 5,
ein Indenyl der Formel C₉H₇₋ᵣR⁶ᵣ mit r für 0, 1, 2, 3, 4, 5, 6, 7,
ein Fluorenyl der Formel C₁₃H₉₋ₛR⁶ₛ mit s für 0, 1, 2, 3, 4, 5, 6, 7, 8, 9 sowie ein C₁- bis C₃₀-Alkylrest, ein C₆- bis C₁₀-Arylrest, sowie ein C₇- bis C₄₀-Alkylarylrest ist,
- R¹ bis R⁵: fiir eine C₁-C₃₀-Alkylgruppe, eine C₆-C₁₀-Arylgruppe, eine C₇-C₄₀-Alkylarylgruppe, insbesondere für Wasserstoff, Methyl, Ethyl, n-Propyl, Isopropyl, n-Butyl, Isobutyl, tert.-Butyl, Phenyl, Methylphenyl, Cyclohexyl und Benzyl stehen,
- L: für einen Ether der Formel R⁶-O-R⁶ oder Thioether der Formel R⁶-S-R⁶ oder ein Amin der Formel NR⁶₃ oder ein Phosphin der Formel PR⁶₃ steht,
- n: eine Zahl von 0 bis 4 ist und
- m und k: die zuvor genannte Bedeutung besitzen,
wobei die anionischen Liganden A ein- oder mehrfach, bevorzugt ein- oder zweifach, durch bivalente Gruppen der Formeln CR⁸₂, C₂R⁸₂, SiR⁸₂, Si₂R⁸₄, GeR⁸₂, GeR⁸₄, R⁸₂SiCR⁸₂, BR⁸, AlR⁸, NR⁸ und PR⁸, worin die Substituenten R⁸ gleich oder verschieden sind und fiir Wasserstoff, C₁-C₂₀-Alkyl, C₃-C₂₀-Cycloalkyl, C₂-C₂₀-Alkenyl, C₆-C₂₀-Aryl, C₇-C₂₀-Alkylaryl oder C₇-C₂₀-Aralkyl stehen, oder durch ein Sauerstoff- oder Schwefelstoffatom verbrückt sein können.

Ganz besonders bevorzugt sind Monoazadien-Metallkomplexe der Formel (I), in der
- M: für Titan, Zirkonium, Hafnium, Vanadium, Niob oder Tantal steht,
- A: für Cyclopentadienyl, Methylcyclopentadienyl, Benzyl-cyclopentadienyl, n-Butylcyclopentadienyl, Pentamethylcyclopentadienyl, Indenyl, 2-Methyl-4,5-benzoindenyl, 2-Methylbenzoindenyl, 2-Methyl-4-phenylindenyl, (4,5,6,7)-Tetrahydroindenyl, 2,4,7-Trimethylindenyl, 2-Methyl-4-(1-naphthyl)indenyl oder Fluorenyl steht,
- L: für Diethylether, Tetrahydrofuran oder Tetrahydrothiophen steht,
und die anionischen Liganden A durch die bivalenten Gruppen Me₂Si, Ph₂Si, Ph(Me)Si, Me₂C, Ph₂C, Ph(Me)C sowie CH₂CH₂ verbrückt sind. Durch die Verbrückung von zwei Liganden A, die gleich oder verschieden sein können, erhält man ein dianionisches Ligandensystem, wie z.B.
Ethylenbis(indenyl),
Ethylenbis(4,5,6,7-tetrahydroindenyl),
Ethylenbis(2-methylindenyl),
Ethylenbis(2,4-dimethylindenyl),
Ethylenbis(2-methyl-4,5-benzoindenyl)
Ethylenbis(2-methyl-4,6-diisopropylindenyl),
Ethylenbis(2-methyl-4-phenylindenyl),
Ethylenbis(2-methyl-4-(1-naphthyl)indenyl),
Ethylenbis(2-methyl-4-ethylindenyl),
Ethylenbis(2-methyl-4-isopropylindenyl),
Ethylenbis(2-methyl-4-methylindenyl),
Ethylenbis(2-methyl-α-acenaphth-1-indenyl),
Dimethylsilandiylbis(indenyl),
Dimethylsilandiylbis(2-methyl-4-ethylindenyl),
Dimethylsilandiylbis(2-methyl-4-isopropylindenyl),
Dimethylsilandiylbis(2-methyl-4-methylindenyl),
Dimethylsilandiylbis(2-methyl-4, 5-benzoindenyl),
Dimethylsilandiylbis(2-methyl-4,6-diisopropylindenyl),
Dimethylsilandiylbis(2-methyl-4-phenylindenyl),
Dimethylsilandiylbis(2-methyl-4-(1-naphthyl)indenyl),
Dimethylsilandiylbis(2-methyl-α-acenaphth-1-indenyl),
Isopropyliden(9-fluorenyl)cyclopentadienyl,
Diphenhylmethylen(9-fluorenyl)cyclopentadienyl,
Phenylmethylmethylen(9-fluorenyl)cyclopentadienyl,
Dimethylsilandiyl(9-fluorenyl)cyclcopentadienyl,
Isopropyliden(9-fluorenyl)-(3-methyl-cyclopentadienyl),
Phenylmethylmethylen(9-fluorenyl)(3-methyl-cyclopentadienyl) oder
Dimethylsilanyl(9-fluorenyl)(3-methyl-cyclopentadienyl).

Die angegebene Formel (I) für die Monoaza-Metallkomplexe ist als eine formale Darstellung der Bindungsverhältsnisse zu sehen und stellt ein Beispiel einer Struktur-Variante dar. Wie dem Fachmann bekannt ist, sind die Bindungsverhältnisse des Metallkomplexes u.a. abhängig vom Zentralatom, von der Oxidationsstufe sowie von den Substituenten des Monoazadien-Liganden.

Als Monoazadien-Metallkomplexe sind besonders geeignet solche der Formel (II) 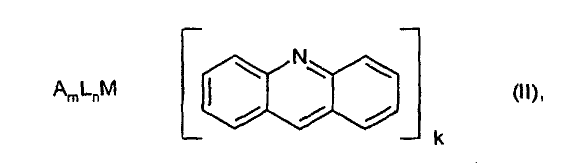 wobei A, L, M und m, n, k die zuvor für die Formel (I) genannte Bedeutung besitzen,
oder solche der Formel (III) 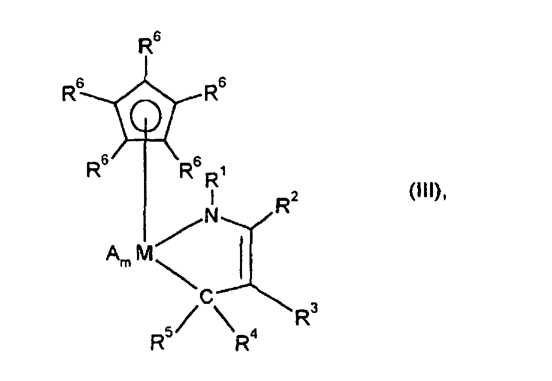 wobei M, A sowie R¹ bis R⁶ und m die zuvor genannte Bedeutung besitzen,
oder Monoazadien-Metallkomplexe der Formel (IV) 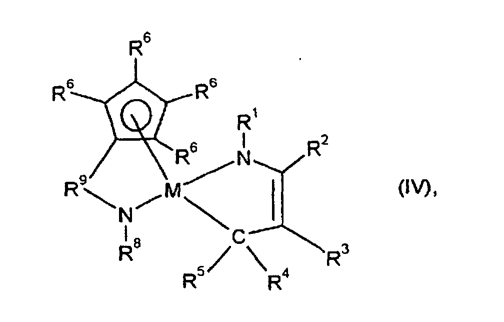 oder Monoaza-Metallkomplexe der Formel (V) 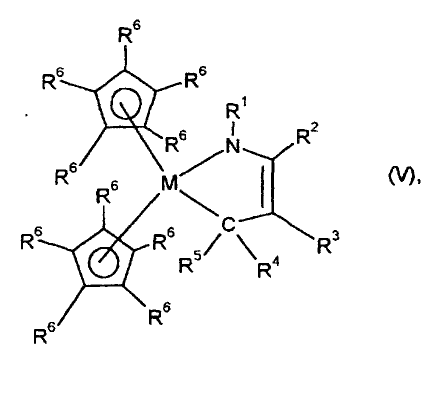 wobei M, A, R¹ bis R⁶, R⁸ und m die zuvor genannte Bedeutung haben und R⁹ eine der zuvor genannten bivalenten Gruppen bedeutet, oder
Monoazadien-Metallkomplexe der Formel (VI) 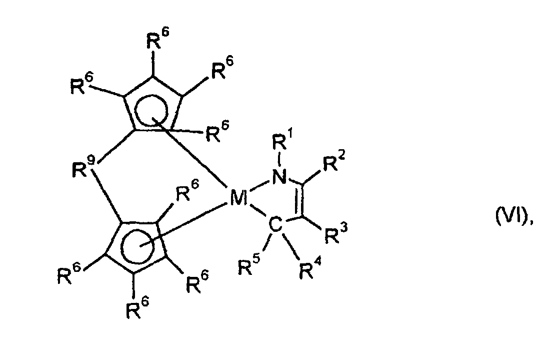 oder Monoazadien-Metallkomplexe der Formel (VII) 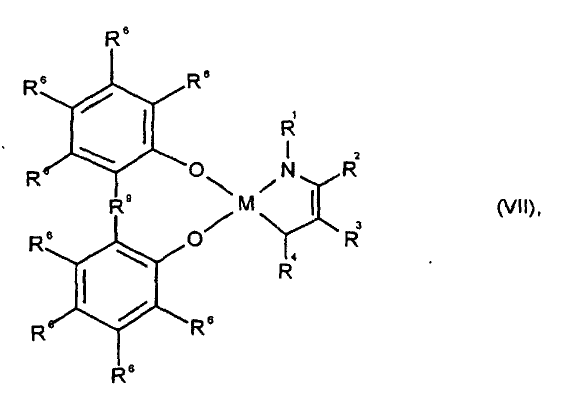 wobei M, sowie R¹ bis R⁶ und R⁹ die zuvor genannte Bedeutung besitzen. In den Verbindungen der Formeln (III) bis (VII) können zwei benachbarte Reste R⁶ jeweils zusammen mit dem sie verbindenden Atomen ein oder mehrere aliphatische oder aromatische Ringsysteme bilden und 5-10 Kohlenstoffatome aufweisen.

Als spezielle Monoazadien-Komplexe sind geeignet solche der Formel (VIII) 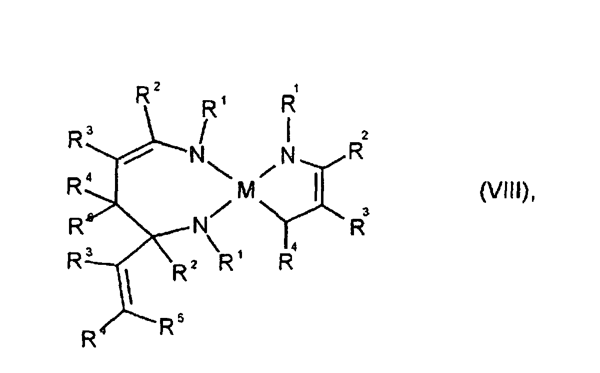 wobei M, sowie R¹ bis R⁵ die zuvor genannte Bedeutung besitzen.

Als Cokatalysatoren kommen die auf dem Gebiet der Metallocene bekannten Cokatalysatoren in Frage wie polymere oder oligomere Alumoxane, Lewissäuren sowie Aluminate und Borate. In diesen Zusammenhang wird insbesondere verwiesen auf Macromol. Symp. Vol. 97, Juli 1995, S. 1-246 (für Alumoxane) sowie auf EP 277 003, EP 277004, Organometallics 1997, 16, 842-857 (fiir Borate) und EP 573 403 (für Aluminate).

Insbesondere eignen sich als Cokatalysatoren Methylalumoxan, durch Triisobutylaluminium modifiziertes Methylalumoxan sowie Diisobutylalumoxan, Trialkylaluminiumverbindungen, wie Trimethylaluminium, Triethylaluminium, Triisobutylaluminium, Triisooctylaluminium, darüber hinaus Dialkylaluminium-Verbindungen, wie Diisobutylaluminiumhydrid, Diethylaluminiumchlorid, substituierte Triarylborverbindungen, wie Tris(pentafluorphenyl)boran, sowie ionische Verbindungen, die als Anion Tetrakis(pentafluorphenyl)borat enthalten, wie Triphenylmethyltetrakis(pentafluorphenyl)borat, -Trimethylammoniumtetrakis(pentafluorphenyl)borat, N,N-Dimethylaniliniumtetrakis(pentafluorphenyl)borat, substituierte Triarylaluminiumverbindungen, wie Tris(pentafluorphenyl)aluminium, sowie ionische Verbindungen, die als Anion Tetrakis(pentafluor-phenyl)aluminat enthalten, wie Triphenylmethyltetrakis(pentafluorphenyl)aluminat, N,N-Dimethylaniliniumtetrakis(pentafluorphenyl)aluminat. Selbstverständlich ist es möglich, die Cokatalysatoren im Gemisch untereinander einzusetzen. Die jeweils günstigsten Mischungsverhältnisse sind durch geeignete Vorversuche zu bestimmen.

Die Synthese der Monoazadien-Metallkomplexe der Formel (I) ist bekannt und beispielsweise beschrieben in Scholz et al., Chem. Ber. 126 (1993), S. 803-809.

Eine Möglichkeit der Herstellung der Monoazadien-Metallkomplexe der Formel (I) besteht darin, daß man einen Metallhalogenkomplex der Formel AₘLₙMX, wobei A, L, M und m, n die zuvor angegebene Bedeutung besitzen und X für F, Cl, Br oder J steht, in Gegenwart eines Monoazadiens mit einem geeigneten Reduktionsmittel enthalogeniert. Als Reduktionsmittel kommen in Frage beispielsweise Alkalimetalle, Erdalkalimetalle, Aluminium, Zink, Legierungen der Alkalimetalle oder Erdalkalimetalle, z.B. Natrium/Quecksilber-Legierung oder Natrium/Kalium-Legierung. Geeignete Reduktionsmittel sind auch Natrium-Naphthalenid, Kalium-Graphit, Lithiumalkyle und Aluminiumalkylverbindungen. Besonders bevorzugt sind Lithium, Magnesium, Grinardverbindungen und n-Butyllithium. Geeignete Lösungsmittel für die Bildung von Monoazadienkomplexen sind aliphatische und aromatische Kohlenwasserstoffe, halogenierte Kohlenwasserstoffe, Ether und cyclische Ether. Beispiele hiefür sind Pentan, Hexan, Heptan, Octan, Cyclohexan, Methylcyclohexan, Benzol, Toluol, Xylol, Dialkylether und Tetrahydrofuran. Auch Mischungen verschiedener Lösungsmittel sind geeignet.

Die Herstellung der Monoazadien-Metallkomplexe der Formel (I) läßt sich formal wie folgt darstellen:

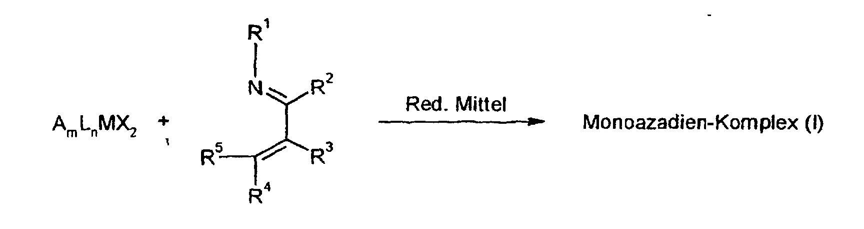

Die Synthese der Monoazadienkomplexe ist auch in technischem Maßstab sehr einfach durchzuführen. Die Monoazadiene sind leicht zugänglich. Die Monoazadienkomplexe sind aufgrund ihres guten Kristallisationsvermögens in hohen Ausbeuten und in sehr reiner Form herstellbar. Die Vorstufen der Formel AₘLₙMX₂ müssen dabei nicht in reiner Form vorliegen, da durch die Umsetzung mit Monoazadienen gut kristallisierbare und leicht zu reinigende Komplexe anfallen. Diese Reinigungsmethode eignet sich besonders vorteilhaft zur Trennung von Gemischen aus chiralen Monoazadienkomplexen der Formel (VI) in die rac- und meso-Form. Die rac-Form von C₂-symmetrischen ansa-Metallocenen ist insbesondere für die stereospezifische Olefinpolymerisation geeignet, z.B. zur Herstellung von isotaktischem Polypropylen (Angew. Chem. 1985, 97, 507).

Ein weiterer Gegenstand der vorliegenden Erfindung ist eine Methode zur Herstellung von chiralen Monoazadien-Komplexen der Formel (VI) in der rac. Form.

Ein weiterer Gegenstand der vorliegenden Erfindung ist die Verwendung des neuen Katalysatorssystems für die Polymerisation von ungesättigten Verbindungen, insbesondere von Olefinen und Dienen. Als Polymerisation wird dabei sowohl die Homoals auch die Copolymerisation der genannten ungesättigten Verbindungen verstanden. Insbesondere werden bei der Polymerisation eingesetzt C₂-C₁₀-Alkene, wie Ethylen, Propylen, Buten-1, Penten-1 und Hexen-1, Octen-1, Isobutylen und Arylalkene, wie Styrol. Als Diene werden insbesondere eingesetzt: konjugierte Diene, wie 1,3-Butadien, Isopren, 1,3-Pentadien, und nicht konjugierte Diene, wie 1,4-Hexadien, 1,5-Heptadien, 5,7-Dimethyl-1,6-octadien, 4-Vinyl-1-cyclohexen, 5-Ethyliden-2-norbornen, 5-Vinyl-2-norbornen und Dicyclopentadien.

Bevorzugt eignen sich die erfindungsgemäßen Katalysatoren für die Herstellung von Kautschuken auf Basis von Copolymeren des Ethylens mit einem oder mehreren der genannten α-Olefine und der genannten Diene. Darüber hinaus eignet sich das erfindungsgemäße Katalysatorsystem fiir die Polymerisation von Cyclo-Olefinen, wie Norbornen, Cyclopenten, Cyclohexen, Cyclooctan, und der Copolymerisation von Cycloolefinen mit Ethylen oder α-Olefinen. Chirale Monoazadienkomplexe können als Katalysatoren für die stereospezifische Olefinpolymerisation eingesetzt werden.

Die Polymerisation kann in flüssiger Phase, in Gegenwart oder Abwesenheit eines inerten Lösungsmittels, oder in der Gasphase durchgeführt werden. Als Lösungsmittel eignen sich aromatische Kohlenwasserstoffe, wie Benzol und/oder Toluol, oder aliphatische Kohlenwasserstoffe, wie Propan, Hexan, Heptan, Octan, Isobutan, Cyclohexan oder Gemische der verschiedenen Kohlenwasserstoffe.

Es ist möglich, das erfindungsgemäße Katalysatorsystem auf einen Träger aufgebracht einzusetzen. Als geeignete Trägermaterialien sind z.B. zu nennen: anorganische oder organische polymere Träger, wie Silicagel, Zeolithe, Ruß, Aktivkohle, Aluminiumoxid, Polystyrol sowie Polypropylen.

Dabei kann das erfindungsgemäße Katalysatorsystem in üblicher Weise auf die Trägermaterialien aufgebracht werden. Methoden zur Trägerung von Katalysatorsystemen sind beispielsweise beschrieben in US 4 808 561, 4 912 075, 5 008 228 und 4 914 253.

Die Polymerisation wird im allgemeinen bei Drücken von 1 bis 1 000, bevorzugt 1 bis 100 bar, und Temperaturen von -100 bis +250°C, bevorzugt 0 bis +150°C, durchgeführt. Die Polymerisation kann in üblichen Reaktoren, kontinuierlich oder diskontinuierlich durchgeführt werden.

Aufgrund der hervorragenden Stabilität in Lösung läßt sich das erfindungsgemäße Katalysatorsystem besonders gut in einem technischen Kontiprozeß im Lösungsverfahren einsetzen.

Die Erfindung wird anhand der nachstehenden Beispiele näher erläutert.

### Beispiele

### Beispiel 1

### Herstellung von 2-Chloro-2-cyclopentadienyl-1-cyclohexyl-4-methyl-3-phenyl-1-aza-2-titana-cyclopent-4-en

Eine Lösung von 5 g (22,79 mmol) Cyclopentadienyltitan(IV)chlorid in 100 ml THF wurde mit 5,18 g (22,79 mmol) 1-Cyclohexyl-3-methyl-4-phenyl-1-aza-buta-1,3-dien und 0,55 g Magnesium versetzt und bei Raumtemperatur gerührt, bis das Metall vollständig umgesetzt war. Anschließend wurde das Lösungsmittel im Vakuum bis zur Trockene entfernt und der Rückstand mit 50 ml Diethylether extrahiert. Aus dem Diethylether-Extrakt wurden 4,36 g 2-Chloro-2-cyclopentadienyl-1-cyclohexyl-4-methyl-3-phenyl-1-aza-2-titana-cyclopent-4-en als dunkelbraune Kristalle isoliert. (51 % Ausbeute, charakterisiert durch ¹H-NMR, ¹³C-NMR und Elementaranalyse).

### Polymerisation von Ethylen

In einen 250 ml Glasreaktor wurden 100 ml Toluol und 5 ml einer 10 %-igen Lösung von Methylalumoxan (MAO) vorgelegt. Anschließend wurde mit einem Gaseinleitungsrohr kontinuierlich bei 1,1 bar Druck Ethylen in die Lösung eingeleitet. Die Polymerisation wurde durch Zugabe einer Lösung von 3,75 mg (10 µmol) 2-Chloro-2-cyclopentadienyl-1-cyclohexyl-4-methyl-3-phenyl-1-aza-2-titana-cyclopent-4-en in 5 ml Toluol gestartet. Bei einer Temperatur von 20 °C und einem Ethylendruck von 1,1 bar wurde die Reaktion nach 15 min Polymerisationsdauer durch Zugabe von 10 ml Methanol abgestoppt, das entstandene Polymer abfiltriert, mit Aceton gewaschen und im Vakuumtrockenschrank getrocknet. Es wurden 1,6 g Polyethylen erhalten.

### Beispiel 2

### Polymerisation von 1,3-Butadien

12,2 mg (32,5 µmol) 2-Chloro-2-cyclopentadienyl-1-cyclohexyl-4-methyl-3-phenyl-1-aza-2-titana-cyclopent-4-en (gemäß Beispiel 1 hergestellt) wurden in 9,8 ml einer 10 %-igen Lösung von MAO in Toluol bei 20 °C gelöst. Der Titankomplex löste sich mit grüner Farbe auf und wurde zu einer Monomerlösung, bestehend aus 150 ml Toluol und 22 g 1,3-Butadien gegeben. Die Polymerisation wurde bei 20°C in homogener Lösung durchgeführt und nach 30 min durch Zugabe von 10 ml Methanol mit 0,3 g Vulkanox BKF als Stabilisator abgestoppt. Das Polymer wurde in Methanol gefällt und im Vakuumtrockenschrank bei 60 °C getrocknet. Man erhielt 2,0 g eines Polybutadiens mit einer Selektivitätsverteilung von 80,8 % 1,4-cis, 2,6 % 1,4-transund 16,5 % 1,2-Einheiten.

### Beispiel 3

### Polymerisation von 1,3-Butadien in Gegenwart von Styrol

Die Polymerisation aus Beispiel 2 wurde wiederholt, mit dem Unterschied, daß 10 µmol des Katalysators eingesetzt wurden und zu der Monomerlösung, bestehend aus 80 ml Toluol und 11,6 g Butadien zusätzlich noch 10 ml Styrol gegeben wurden. Die Polymerisation erfolgte 60 min bei 20 °C. Es wurden 2,4 g eines Polybutadiens isoliert.

### Beispiel 4

### Herstellung von Bis(cyclopentadienyl)zirconium-acridin

Eine Lösung von 5,00 g (17,10 mmol) Zirconocendichlorid in 100 ml THF wurde mit 3,06 g (17,10 mmol) Acridin und 0,41 g Magnesium versetzt und bei Raumtemperatur gerührt, bis das Metall vollständig umgesetzt war. Anschließend wurde das Lösungsmittel im Vakuum bis zur Trockene entfernt und der Rückstand mit 80 ml Toluol extrahiert. Aus dem Toluol-Extrakt wurden 4,29 g Bis(cyclopentadienyl)-zirconium-acridin als roter Feststoff isoliert.

### Polymerisation von Ethylen

In einen 1,4-1-Stahl-Autoklaven wurden 500 ml Toluol, 0,1 ml TIBA und 1 ml einer Lösung von 2,0 mg (5 µmol) Bis(cyclopentadienyl)zirconium-acridin in 10 ml Toluol, vorgelegt. Diese Lösung wurde auf 80 °C temperiert. Anschließend wurde Ethylen zudosiert, bis der Reaktorinnendruck auf 7 bar anstieg. Durch Zugabe einer Lösung von 2,5 mg (5 µmol) Tris(pentafluorphenyl)boran in 5 ml Toluol wurde die Polymerisation gestartet. Nach einer Polymerisationsdauer von 15 min bei 80 °C und 7 bar wurde der Autoklav entspannt, das Polymere abfiltriert, mit Aceton gewaschen und 20 h im Vakuum bei 60 °C getrocknet. Es wurden 22,1 g Polyethylen erhalten.

### Beispiel 5

### Herstellung von 2,2-Bis(cyclopentadienyl)-1-cyclohexyl-3-phenyl-1-aza-2-zircona-cyclopent-4-en

Eine Lösung von 10,00 g (34,21 mmol) Zirconocendichlorid in 150 ml THF wird mit 7,30 g (34,21 mmol) 1-Cyclohexyl-4-phenyl-1-aza-buta-1,3-dien und 0,83 g Magnesium versetzt und bei Raumtemperatur gerührt, bis das Metall vollständig umgesetzt war. Anschließend wurde das Lösungsmittel im Vakuum bis zur Trockene entfernt und der Rückstand mit 80 ml Diethylether extrahiert. Aus dem Diethylether-Extrakt wurden 11,21 g 2,2-Bis(cyclopentadienyl)-1-cyclohexyl-3-phenyl-1-aza-2-zirconacyclopent-4-en als orangegelber Feststoff isoliert (75 % Ausbeute, charakterisiert durch ¹H-NMR, ¹³C-NMR und Elementaranalyse).

### Herstellung der Katalysatorlösung

10,4 mg (23,92 µmol) 2,2-Bis(cyclopentadienyl)-1-cyclohexyl-3-phenyl-1-aza-2-zircona-cyclopent-4-en wurden in 22,8 ml Hexan und 1,2 ml TIBA gelöst.

### Copolymerisation von Ethylen mit 1-Hexen

In einen 1,4-1-Stahl-Autoklaven wurden 500 ml Hexan, 50 ml 1-Hexen und 1 ml der Katalysatorlösung vorgelegt. Diese Lösung wurde auf 70 °C temperiert. Anschließend wurde Ethylen zudosiert, bis der Reaktorinnendruck auf 7 bar anstieg. Durch Zugabe einer Lösung von 0,92 mg (1 µmol) Triphenylmethyl-tetrakis(pentafluorphenyl)borat in 5 ml Toluol wurde die Polymerisation gestartet. Nach einer Polymerisationsdauer von 25 min bei 70 °C und 7 bar wurde der Autoklav entspannt, das Polymere abfiltriert, mit Aceton gewaschen und 20 h im Vakuum bei 60 °C getrocknet. Es wurden 24 g eines Ethylen/1-Hexen Copolymers erhalten.

### Beispiel 6

### Herstellung von 2,2-[(rac-Dimethylsilyl-bis(1-indenyl)]-1-(tert-butyl)-3-phenyl-1-aza-2-zirkona-cyclopent-4-en

Eine Lösung von 1,10 g (2,45 mmol) rac-Dimethylsilylbis(1-indenyl)zirconiumdichlorid in 50 ml THF wurde mit 0,46 g (2,45 mmol) 1-(tert-Butyl)-4-phenyl-1-azabuta-1,3-dien und 0,06 g Magnesium versetzt und bei Raumtemperatur gerührt, bis das Metall vollständig umgesetzt war. Anschließend wurde das Lösungsmittel im Vakuum bis zur Trockene entfernt und der Rückstand mit 30 ml Pentan extrahiert. Aus dem Pentan-Extrakt wurden 0,50 g 2,2-[(rac-Dimethylsilyl-bis(1-indenyl)]-1-(tertbutyl)-3-phenyl-1-aza-2-zirkona-cyclopent-4-en als orangefarbener Feststoff isoliert (34 % Ausbeute, charakterisiert durch ¹H-NMR und ¹³C-NMR).

### Herstellung der Katalysatorlösung

32,7 mg (57,9 µmol) 2,2-[(rac-Dimethylsilyl-bis(1-indenyl)]-1-(tert-butyl)-3-phenyl-1-aza-2-zirkona-cyclopent-4-en wurden in 55 ml Hexan und 2,9 ml TIBA gelöst.

### Polymerisation von Propylen

In einen 1,4-1-Stahl-Autoklaven wurden 500 ml Hexan, 0,1 ml TIBA, 200 g Propylen und 2 ml der Katalysatorlösung vorgelegt. Diese Lösung wurde auf 50 °C temperiert. Durch Zugabe einer Lösung von 1,8 mg CPh3[B(C6F5)4] in 5 ml Toluol wurde die Polymerisation gestartet. Nach einer Polymerisationsdauer von 1 h bei 50 °C wurde die Reaktion durch Zugabe von Methanol abgestoppt, das Polymere abfiltriert und 20 h im Vakuum bei 60 °C getrocknet. Es wurden 158 g isotaktisches Polypropylen erhalten.

### Beispiel 7

### Herstellung von 2,2-Bis(cyclopentadienyl)-1-cyclohexyl-4-methyl-3-phenyl-1-aza-2-titana-cyclopent-4-en

Eine Lösung von 5,00 g (20.08 mmol) Titanocendichlorid in 100 ml THF wurde mit 4,57 g (20.08 mmol) 1-Cyclohexyl-3-methyl-4-phenyl-1-aza-buta-1,3-dien und 0,83 g Magnesium versetzt und bei Raumtemperatur gerührt, bis das Metall vollständig umgesetzt war. Anschließend wurde das Lösungsmittel im Vakuum bis zur Trockene entfernt und der Rückstand mit 50 ml Diethylether extrahiert. Aus dem Diethylether-Extrakt wurden 5,31 g 2,2-Bis(cyclopentadienyl)-1-cyclohexyl-4-methyl-3-phenyl-1-aza-2-titana-cyclopent-4-en als schwarze Kristalle isoliert. (65 % Ausbeute, charakterisiert durch ¹H-NMR, ¹³C-NMR und Elementaranalyse).

### Synthese von EPM

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Toluol vorgelegt. Hierzu wurden 5 ml einer 10 %-igen Lösung von MAO in Toluol gegeben und 10 min gerührt. Dann wurden 57 g Propylen zudosiert. Die Innentemperatur wurde mit einem Thermostaten auf 70 °C eingestellt. Anschließend wurde Ethylen zudosiert, bis der Reaktorinnendruck auf 7 bar anstieg. Durch Zugabe einer Lösung von 10 mg 2,2-Bis(cyclopentadienyl)-1-cyclohexyl-4-methyl-3-phenyl-1-aza-2-titana-cyclopent-4-en in 2 ml Toluol wurde die Polymerisation gestartet und bei 70 °C kontinuierlich Ethylen zudosiert, so daß der Innendruck bei konstant 7 bar gehalten wurde. Nach 1 Stunde Polymerisationsdauer wurde die Polymerisation mit einer 1 %-igen HCl-Lösung in Methanol abgestoppt, 10 min gerührt und anschließend das Polymer mit Methanol ausgefällt. Das so erhaltene Polymer wurde mit Methanol gewaschen, isoliert und 20 h bei 60 °C im Vakuum getrocknet, wobei 44,1 g Copolymer erhalten wurden. Die IR-spektroskopische Ermittlung der Zusammensetzung des Copolymers ergab einen Einbau von 68,1 % Ethylen und 31,9 % Propylen. Mit der DSC-Methode wurde ein Tg von -53 °C ermittelt.

### Beispiel 8

### Herstellung von 2,2-[(rac-Ethylen-bis(1-indenyl)]-1-(tert-butyl)-3-phenyl-1-aza-2-zirkona-cyclopent-4-en

Eine Lösung von 1,82 g (4,35 mmol) rac-Ethylenbis(1-indenyl)zirconiumdichlorid in 50 ml THF wurde mit 0,82 g (4,35 mmol) 1-(tert-Butyl)-4-phenyl-1-aza-buta-1,3-dien und 0,10 g Magnesium versetzt und bei Raumtemperatur gerührt, bis das Metall vollständig umgesetzt war. Anschließend wurde das Lösungsmittel im Vakuum bis zur Trockene entfernt und der Rückstand mit 30 ml Diethylether extrahiert. Aus dem Diethylether-Extrakt wurden 0,98 g 2,2-[(rac-Ethylen-bis(1-indenyl)]-1-(tert-butyl)-3-phenyl-1-aza-2-zirkona-cyclopent-4-en als orangefarbener Feststoff isoliert (40 % Ausbeute, charakterisiert durch ¹H-NMR und ¹³C-NMR).

### Herstellung der Katalysatorlösung

23,6 mg (44 µmol) 2,2-[(rac-Ethylen-bis(1-indenyl)]-1-(tert-butyl)-3-phenyl-1-aza-2-zirkona-cyclopent-4-en wurden in 41,8 ml Hexan und 2,2 ml Triisobutylaluminium (TIBA) gelöst. Diese Katalysatorlösung wurde bei 20 °C in einem Schlenkgefäß unter Argon aufbewahrt.

### Synthese von EPDM

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Hexan und 0,1 ml TIBA vorgelegt. Hierzu wurde 1 ml der frisch hergestellten Katalysatorlösung gegeben. Dann wurden 5 ml 5-Ethyliden-2-norbornen (ENB) zudosiert. Die Innentemperatur wurde mit einem Thermostaten auf 80 °C eingestellt. Anschließend wurden 22 g Ethylen und 38 g Propylen zudosiert. Durch Zugabe einer Lösung von 1,0 mg CPh3[B(C6F5)4] in 5 ml Toluol wurde die Polymerisation gestartet. In Semibatch-Fahrweise wurde Ethylen und Propylen im Massenverhältnis von 3 : 2 kontinuierlich zudosiert, so daß der Innendruck bei 80 °C konstant 4 bar betrug. Nach 1 Stunde Polymerisationsdauer wurde die Polymerlösung mit einer 0,1 Gew-% Hexan-Lösung Vulkanox BKF versetzt, 10 min gerührt und anschließend das Polymer mit Methanol ausgefällt. Das so erhaltene Polymer wurde isoliert und 20 h bei 60 °C im Vakuum getrocknet, wobei 121,7 g Terpolymeren erhalten wurden. Die IR-spektroskopische Ermittlung der Zusammensetzung des Terpolymers ergab einen Einbau von 66,4 % Ethylen, 29,9 % Propylen und 3,7 % ENB. Mit der DSC-Methode wurde ein Tg von -51 °C ermittelt.

### Beispiel 9

### Synthese von EPDM

Die Polymerisation gemäß Beispiel 8 wurde wiederholt, mit dem Unterschied, daß 1 ml der Katalysatorlösung aus Beispiel 8 nach einer Lagerzeit von 30 Tagen eingesetzt wurde. Es wurden 121,0 g Terpolymer mit dem Einbauverhältnis von 66,2 % Ethylen, 30,0 % Propylen und 3,8 % ENB erhalten. Mit der DSC-Methode wurde ein Tg von -50 °C ermittelt.

### Beispiel 10

### Synthese von EPDM

Die Polymerisation aus Beispiel 9 wurde wiederholt, mit dem Unterschied, daß in den Autoklaven neben 500 ml Hexan und 0,1 ml TIBA zusätzlich 50 g Propylen und 10 ml ENB vorgelegt wurden, auf 50 °C temperiert wurde und Ethylen kontinuierlich bei einem Druck von 4 bar zudosiert wurde. Nach einer Polymerisationszeit von 35 min wurde die Reaktion abgestoppt. Es wurden 99,3 g Terpolymer mit dem Einbauverhältnis von 57,4 % Ethylen, 34,2 % Propylen und 9,2 % ENB erhalten. Der Tg der DSC-Messung liegt bei -48 °C.

### Beispiel 11

### Herstellung von 2,2'-[(rac-Ethylen-bis(tetrahydroindenyl)]-1-(tert-butyl)-3-phenyl-1-aza-2-zirkona-cyclopent-4-en

1,22 g (2,86 mmol) rac-Ethylenbis(tetrahydroindenyl)zirconiumdichlorid wurden in 50 ml THF suspendiert. Bei 20 °C gab man nacheinander 0,54 g (2,83 mmol) 1-(tert-Butyl)-4-phenyl-1-aza-buta-1,3-dien und 0,07 g Magnesium dazu. Die Reaktion startete bereits nach 5 Minuten. Die Farbe der Suspension änderte sich innerhalb von 2 Stunden von gelb nach orange. Es wurde bis zum vollständigen Verbrauch des Magnesiums weitergerührt. Nach Ende der Reaktion wurde das Lösungsmittel im Vakuum bis zur Trockene entfernt und der Rückstand mit 30 ml Diethylether extrahiert. Aus dem Diethylether-Extrakt wurden 0,79 g 2,2'-[(rac-Ethylen-bis(1-indenyl)]-1-(tert-butyl)-3-phenyl-1-aza-2-zirkona-cyclopent-4-en als orangefarbener Feststoff isoliert (52 % Ausbeute, charakterisiert durch ¹H-NMR und ¹³C-NMR).

### Herstellung der Katalysatorlösung

45,2 mg (83,3 µmol) 2,2'-[(rac-Ethylen-bis(tetrahydroindenyl}]-1-(tert-butyl)-3-phenyl-1-aza-2-zirkona-cyclopent-4-en wurden in 14,6 ml Hexan und 2,1 ml Triisobutylaluminium (TIBA) gelöst. Diese Katalysatorlösung wurde bei 20 °C in einem Schlenkgefäß unter Argon aufbewahrt.

### Synthese von EPDM

Die Polymerisation aus Beispiel 10 wurde wiederholt, mit dem Unterschied, daß in den Autoklaven 500 ml Hexan, 0,1 ml TIBA und 0,5 ml der Katalysatorlösung aus Beispiel 11 vorgelegt wurden. Hierzu wurden 49 g Propylen, 11g Ethylen und 5 ml ENB zudosiert und der Inhalt des Autoklaven auf 60 °C temperiert. Durch Zugabe einer Lösung von 4,6 mg CPh3[B(C6F5)4] in 5 ml Toluol wurde die Polymerisation gestartet. Anschließend wurde Ethylen kontinuierlich bei einem Druck von 4 bar zudosiert. Nach einer Polymerisationszeit von 75 min wurde die Reaktion abgestoppt. Es wurden 70,5 g Terpolymer mit dem Einbauverhältnis von 70,5 % Ethylen, 23,4 % Propylen und 6,4 % ENB erhalten. Der Tg der DSC-Messung liegt bei -45 °C.

### Beispiel 12

### Herstellung von 1,3-Dicyclohexyl-6-methyl-5-phenyl-4-(1-methyl-2-phenyl-ethen-1-yl)-1,3-diaza-2-titana-cyclohept-6-en-2-spiro-2'-(1'-cyclohexyl-4'-methyl-3'-phenyl-1'-aza-2'-titana-cyclopent-4'-en

Eine Lösung von 3,00 g (9,21 mmol) Titantetrachlorid-THF-Addukt in 100 ml THF wurde mit 4,19 g (18,42 mmol) 1-(Cyclohexyl)-3-methyl-4-phenyl-1-aza-buta-1,3-dien und 0,45 g Magnesium versetzt und bei 20°C 12 Stunden gerührt, bis das Metall vollständig umgesetzt war. Nach Ende der Reaktion wurde das Lösungsmittel im Vakuum bis zur Trockene entfernt und der Rückstand mit 30 ml Pentan extrahiert. Aus dem Pentan-Extrakt fielen bei -5°C 2,4 g 1,3-Dicyclohexyl-6-methyl-5-phenyl-4-(1-methyl-2-phenyl-ethen-1-yl)-1,3-diaza-2-titana-cyclohept-6-en-2-spiro-2'-(1'-cyclohexyl-4'-methyl-3'-phenyl-1'-aza-2'-titana-cyclopent-4'-en als schwarzer kristalliner Feststoff aus. (36 % Ausbeute, charakterisiert mittels ¹H-NMR und ¹³C-NMR-Spektroskopie).

### Herstellung der Katalysatorlösung

80,2 mg (122,7 µmol) 1,3-Dicyclohexyl-6-methyl-5-phenyl-4-(1-methyl-2-phenylethen-1-yl)-1,3-diaza-2-titana-cyclohept-6-en-2-spiro-2'-(1'-cyclohexyl-4'-methyl-3'phenyl-1'-aza-2'-titana-cyclopent-4'-en wurden in 3,1 ml Hexan und 3,1 ml Triisobutylaluminium (TIBA) gelöst.

### Polymerisation von Ethylen

In einen 250 ml Glasreaktor wurden 100 ml Hexan und 1 ml der Katalysatorlösung aus Beispiel 12 vorgelegt. Anschließend wurde mit einem Gaseinleitungsrohr kontinuierlich bei 1,1 bar Druck Ethylen in die Lösung eingeleitet. Die Polymerisation wurde durch Zugabe einer Lösung von 36,9 mg CPh3[B(C6F5)4] in 5 ml Toluol gestartet. Bei einer Temperatur von 40 °C und einem Ethylendruck von 1,1 bar wurde die Reaktion nach 15 min Polymerisationsdauer durch Zugabe von 10 ml Methanol abgestoppt, das entstandene Polymer abfiltriert, mit Aceton gewaschen und im Vakuumtrockenschrank getrocknet. Es wurden 350 mg Polyethylen erhalten.

### Beispiel 13

### Herstellung von Bis[2,2'-S-bis(4-methyl-6-tert-butyl-phenolato)]-1-(tert-butyl)-3-phenyl-1-aza-2-titana-cyclopent-4-en

Eine Lösung von 2,92 g (6,14 mmol) Bis[2,2'-S-(4-methyl-6-tert-butyl-phenolato)]-titan-dichlorid in 100 ml Tetrahydrofuran wurde mit 1,15 g (6,14 mmol) 1-(tert-Butyl)-4-phenyl-1-azabuta-1,3-dien und 0,15 g Magnesium versetzt und bei Raumtemperatur gerührt, bis das Metall vollständig umgesetzt war. Anschließend wurde das Lösungsmittel im Vakuum bis zur Trockene entfernt und der Rückstand mit 30 ml Pentan extrahiert. Aus dem Pentan-Extrakt wurden 3,2 g Bis[2,2'-S-bis(4-methyl-6-tertbutyl-phenolato)]-1-(tert-butyl)-3-phenyl-1-aza-2-titana-cyclopent-4-en als brauner Feststoff isoliert. (88 % Ausbeute, charakterisiert mittels ¹H-NMR und ¹³C-NMR-Spektroskopie).

### Polymerisation von Ethylen

In einen 250 ml Glasreaktor wurden 100 ml Toluol und 5 ml einer 10 %-igen Lösung von Methylalumoxan (MAO) vorgelegt. Anschließend wurde mit einem Gaseinleitungsrohr kontinuierlich bei 1,1 bar Druck Ethylen in die Lösung eingeleitet. Die Polymerisation wurde durch Zugabe einer Lösung von 5,3 mg (8 µmol) Bis[2,2'-S-bis(4-methyl-6-tert-butyl-phenolato)]-1-(tert-butyl)-3-phenyl-1-aza-2-titana-cyclopent-4-en in 5 ml Toluol gestartet. Bei einer Temperatur von 40 °C und einem Ethylendruck von 1,1 bar wurde die Reaktion nach 15 min Polymerisationsdauer durch Zugabe von 10 ml Methanol abgestoppt, das entstandene Polymer abfiltriert, mit Aceton gewaschen und im Vakuumtrockenschrank getrocknet. Es wurden 0,97 g Polyethylen erhalten.

## Patentansprüche

1. Katalysatorsystem bestehend aus
a) einem Monoazadien-Metallkomplex der Formel 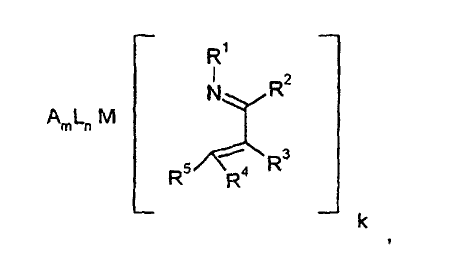 wobei
M ein Metall aus der Gruppe IIIb, IVb, Vb, VIb oder der Lanthaniden oder der Actiniden des Periodensystems der Elemente [N.N. Greenwood, A. Earnshaw, Chemie der Elemente, VCH 1990] ist,
A ein gegebenenfalls ein- oder mehrfach verbrückter anionischer Ligand bedeutet,
R¹, R², R³, R⁴, R⁵ gleich oder verschieden sind und stehen für Wasserstoff, eine Cyanogruppe, Halogen, eine C₁- bis C₂₀-Alkylgruppe, eine C₁- bis C₁₀-Fluoralkylgruppe, eine C₆- bis C₁₀-Fluorarylgruppe, eine C₁- bis C₁₀-Alkoxygruppe, eine C₆- bis C₂₀-Arylgruppe, eine C₆- bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀- Arylalkenylgruppe, eine C₂ bis C₁₀-Alkinylgruppe, eine gegebenenfalls durch C₁-C₁₀-Kohlenwasserstoffreste substituierte Silylgruppe
oder
R¹, R², R³, R⁴, R⁵ jeweils zusammen mit den sie verbindenden Atomen ein oder mehrere aliphatische oder aromatische Ringsysteme bilden, welche ein oder mehrere Heteroatome (O, N, S) enthalten können und 5 bis 10 Kohlenstoffatome aufweisen,
L ein Neutralligand bedeutet,
n eine Zahl von 0 bis 10 ist,
m 0, 1, 2, 3 oder 4 bedeutet sowie
k 1, 2 oder 3 ist und die Summe von m + k in Abhängigkeit von der Oxidationsstufe von M 1 bis 5 beträgt
und
b) einem zur Aktivierung des Metallkomplexes a) geeigneten Cokatalysator, wobei das molare Verhältnis von Komponente a) zu Komponente b) im Bereich von 1:0,1 bis 1:10 000, bevorzugt 1:1 bis 1:1 000, liegt.

2. Verwendung des Katalysatorsystems nach Anspruch 1 zur Polymerisation von Olefinen und/oder Dienen.

## Claims

1. Catalyst system consisting of
a) a monoazadiene metal complex of the formula 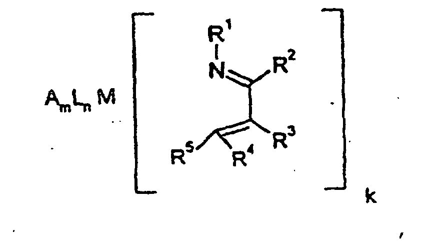 wherein
M is a metal from Group IIIb, IVb, Vb, VIb or the lanthanides or actinides of the periodic table [N.N. Greenwood, A. Earnshaw, Chemie der Elemente, VCH 1990],
A signifies an optionally monobridged or multibridged anionic ligand,
R¹, R², R³, R⁴, R⁵ are the same or different and stand for hydrogen, a cyano group, halogen, a C₁ to C₂₀ alkyl group, a C₁ to C₁₀ fluoroalkyl group, a C₆ to C₁₀ fluoroaryl group, a C₁ to C₁₀ alkoxy group, a C₆ to C₂₀ aryl group, a C₆ to C₁₀ aryloxy group, a C₂ to C₁₀ alkenyl group, a C₇ to C₄₀ arylalkyl group, a C₇ to C₄₀ alkylaryl group, a C₈ to C₄₀ arylalkenyl group, a C₂ to C₁₀ alkynyl group, a silyl group optionally substituted by C₁-C₁₀ hydrocarbon radicals
or
R¹, R², R³, R⁴, R⁵ form, together with the atoms linking them in each case, one or more aliphatic or aromatic ring systems, which may contain one or more heteroatoms (O, N, S) and have 5 to 10 carbon atoms,
L signifies a neutral ligand,
n is a number from 0 to 10,
m signifies 0, 1, 2, 3 or 4 and
k is 1, 2 or 3 and the sum of m + k is 1 to 5, as a function of the oxidation number of M
and
b) a co-catalyst suitable for activating the metal complex a), the molar ratio of component a) to component b) lying in the range of 1:0.1 to 1:10 000, preferably 1:1 to 1:1 000.

2. Use of the catalyst system according to claim 1 for the polymerisation of olefins and/or dienes.

## Revendications

1. Système catalytique constitué par
a) un complexe métallique de monoazadiène de formule 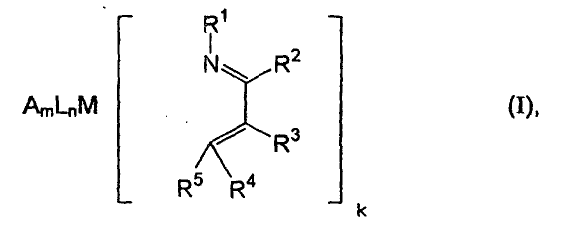 dans laquelle
M est un métal du groupe IIIb, IVb, Vb, VIb ou des lanthanides ou des actinides du système périodique des éléments [N. N. Greewood, A. Earnshaw, Chemie der Elemente, VCH 1990],
A signifie un ligand anionique éventuellement ponté une fois ou plusieurs fois,
R¹, R², R³, R⁴, R⁵ sont identiques ou différents et représentent l'hydrogène, un halogène, un groupe cyano, un groupe alkyle en C₁ à C₂₀, un groupe fluoroalkyle en C₁ à C₁₀, un groupe fluroaryle en C₆ à C₁₀, un groupe alcoxy en C₁ à C₁₀, un groupe aryle en C₆ à C₂₀, un groupe aryloxy en C₆ à C₁₀, un groupe alcényle en C₂ à C₁₀, un groupe arylalkyle en C₇ à C₄₀, un groupe alkylaryle en C₇ à C₄₀, un groupe arylalcényle en C₈ à C₄₀, un groupe alcynyle en C₂ à C₁₀, un groupe silyle éventuellement substitué par un radical hydrocarboné en C₁-C₁₀
ou
R¹, R², R³, R⁴, R⁵ forment, ensemble avec les atomes les liant Le A 32 331-EFR (98 109 263.8)
dans chaque cas, un ou plusieurs systèmes cycliques aliphatiques ou aromatiques, qui peuvent contenir un ou plusieurs hétéroatomes (O, N, S) et ont 5 à 10 atomes de carbone,
L signifie un ligand neutre,
n est un nombre de 0 à 10,
m signifie 0, 1, 2, 3 ou 4 et
k est 1, 2 ou 3 et la somme de m + k est 1 à 5, en fonction du nombre d'oxydation de M
et
b) un co-catalyseur approprié pour activer le complexe métallique a), où le rapport molaire du composant a) au composant b) est dans la plage de 1 : 0,1 à 1 : 10 000, de préférence 1 : 1 à 1 : 1000.

2. Utilisation du système catalytique selon la revendication 1 pour la polymérisation des oléfines et/ou des diènes.
